Europäisches Patentamt

European Patent Office

Office européen des brevets

(11) Numéro de publication: **0 134 728**
**A1**

## (12) DEMANDE DE BREVET EUROPEEN

(21) Numéro de dépôt: **84401272.4**

(22) Date de dépôt: **20.06.84**

(51) Int. Cl.⁴: **B 60 J 1/16**

(30) Priorité: **22.06.83 FR 8310324**

(43) Date de publication de la demande:
**20.03.85 Bulletin 85/12**

(84) Etats contractants désignés:
**AT BE CH DE GB IT LI LU NL SE**

(71) Demandeur: **Etablissements FARNIER ET PENIN**
**11-13, rue J.B. Charcot**
**F-92400 Courbevoie (Hauts-de-Seine)(FR)**

(72) Inventeur: **Bichon, Jacky**
**2, Allée du Camp Romain**
**F-79300 Bressuire (Deux-Sèvres)(FR)**

(72) Inventeur: **Neaux, Jean-Claude**
**Le Chemin du Pas Bodin Terves**
**F-79300 Bressuire(Deux-Sèvres)(FR)**

(74) Mandataire: **Chevallier, Robert Marie Georges**
**Cabinet BOETTCHER 23, rue La Boétie**
**F-75008 Paris(FR)**

(54) Fenêtre à glace coulissante et à montage droite-gauche indifférent pour véhicule.

(57) Fenêtre à glace coulissante et à montage droite-gauche indifférent pour véhicule.

Un bouton de manoeuvre (10) et un verrou de blocage (12) sont montés sur l'axe longitudinal (11) de la glace coulissante (5) et des trous d'évacuation d'eau (21,22) sont prévus à la fois dans le côté supérieur (6) et dans le côté inférieur (7) du cadre (1), de sorte que la fenêtre peut être montée indifféremment sur le côté droit ou sur le côté gauche d'un véhicule, la glace mobile (5) étant toujours en avant, les trous (21, 22) se trouvant effectivement en position supérieure étant obturés par un bouchon approprié (23) après montage de cette fenêtre.

Fig:1

Fenêtre à glace coulissante et à montage droite-gauche
indifférent pour véhicule.

L'invention se rapporte aux fenêtres coulissantes
doubles utilisées fréquemment sur les véhicules (automobiles,
camionnettes, caravanes, autocars, voitures ferroviaires)
dans lesquelles un cadre contient en sens longitudinal
horizontal une demi-glace fixe et une demi-glace coulissante;
quand celle-ci est déplacée pour dégager une ouverture sensiblement égale à ses propres dimensions, elle coulisse
en venant se mettre parallèlement à la glace fixe. Etant
donné que ces fenêtres sont couramment montées sur les
véhicules automobiles au droit des sièges avant, la glace
fixe est la glace la plus en arrière dans le sens longitudinal du véhicule et la glace coulissante est la glace la plus
en avant ; elle est mobile de l'avant vers l'arrière afin
de dégager l'ouverture située à l'emplacement le plus commode pour l'utilisateur.

Il en résulte qu'il a toujours paru nécessaire
de disposer d'une fenêtre gauche pour le côté gauche du
véhicule et d'une fenêtre droite pour son côté droit. Cette
nécessité a semblé d'autant plus impérative que le cadre
possède des trous d'évacuation d'eau qui se trouvent obligatoirement sur son côté inférieur. En outre, la glace coulissante est pourvue d'un bouton de manoeuvre et d'un verrou
qui sont également situés à sa partie inférieure, à proximité
du côté inférieur du cadre.

L'invention a pour objet une fenêtre du type ci-
dessus améliorée pour qu'elle puisse être montée indifféremment sur le côté gauche ou sur le côté droit du véhicule,
la glace mobile restant toujours la glace située la plus en
avant dans le sens longitudinal du véhicule.

De cette façon, on n'a plus à fabriquer et à
stocker qu'une seule fenêtre toujours identique à elle-même
puisqu'on peut l'adapter facilement à son usage sur le côté
gauche ou sur le côté droit du véhicule, juste au moment
du montage sur ce dernier.

Une fenêtre comprenant un cadre ayant un côté avant, un côté arrière, un côté supérieur et un côté inférieur, contenant une première glace appelée glace arrière, une seconde glace appelée glace avant dans le sens longitudinal du cadre, cette seconde glace avant étant guidée en coulissement à l'intérieur du cadre, selon l'invention, la seconde glace avant mobile en coulissement est munie dans sa zone médiane dans le sens de la hauteur, de préférence sur son axe de symétrie, d'un bouton de manoeuvre intérieur et d'un verrou de blocage en position de fermeture.

Selon un perfectionnement supplémentaire, le bouton de manoeuvre comprend un crochet mobile, de préférence par pivotement, et le cadre est pourvu sur son côté vertical avant d'un organe complémentaire d'accrochage, le verrou de blocage et le bouton de manoeuvre étant ainsi réunis en un seul organe.

Il est possible, dans l'esprit de l'invention, de rendre coulissante la glace arrière et de la munir aussi dans sa zone médiane dans le sens de la hauteur, et de préférence sur son axe de symétrie, d'un bouton de manoeuvre intérieur susceptible d'être pourvu d'un crochet mobile en correspondance avec un organe d'accrochage complémentaire monté, par exemple, sur le côté arrière du cadre.

De préférence, le cadre présente à la fois dans son côté supérieur et dans son côté inférieur des trous d'évacuation d'eau.

Les trous d'évacuation d'eau qui se trouvent sur le côté supérieur du cadre après montage de celui-ci sur un véhicule peuvent être obturés au moyen d'un bouchon approprié en matière souple pouvant y être introduit à force. Ces trous sont utiles pour assurer l'évacuation de l'eau qui se rassemble dans le profilé en U qui constitue le cadre et qui sert de glissière à la glace coulissante. Il est possible, si on admet de ne pas évacuer cette eau, de ne pas réaliser de trous dans les côtés supérieur et inférieur du cadre conforme à l'invention. La caractéristique principale de celle-ci est donc la position particulière donnée au bouton de manoeuvre et au verrou, en rupture totale avec la disposition classique qui est adoptée pour eux, jusqu'à présent.

On donnera maintenant, sans intention limitative et sans exclure aucune variante, une description de deux exemples de réalisation. On se reportera aux dessins annexés dans lesquels :

- la figure 1 est une vue en élévation, de l'extérieur, d'une première fenêtre conforme à l'invention,

- la figure 2 est une vue en coupe selon II-II de la figure 1,

- la figure 3 est une vue en coupe selon III-III de la figure 1,

- la figure 4 est une vue en élévation analogue à la figure 1 d'une seconde fenêtre conforme à l'invention ayant un bouton de manoeuvre muni d'un crochet,

- la figure 5 est une vue en coupe selon V-V de la figure 4,

- la figure 6 est une vue en coupe selon VI-VI de la figure 4.

On utilisera les mêmes références pour désigner les pièces identiques des deux exemples de réalisation représentés.

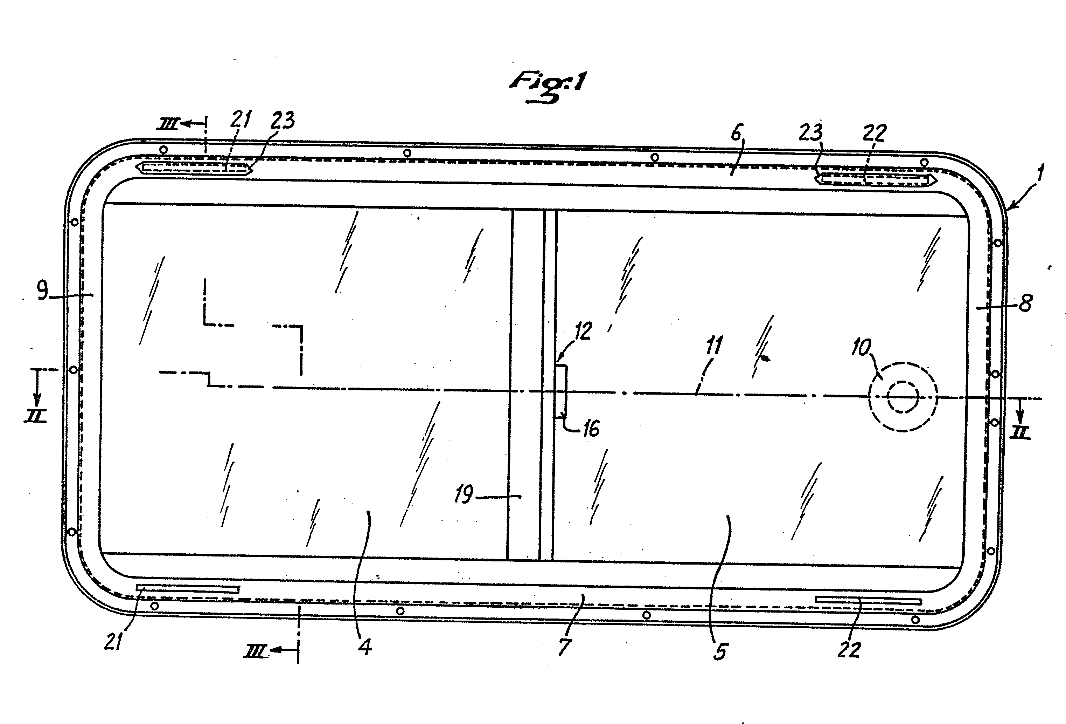

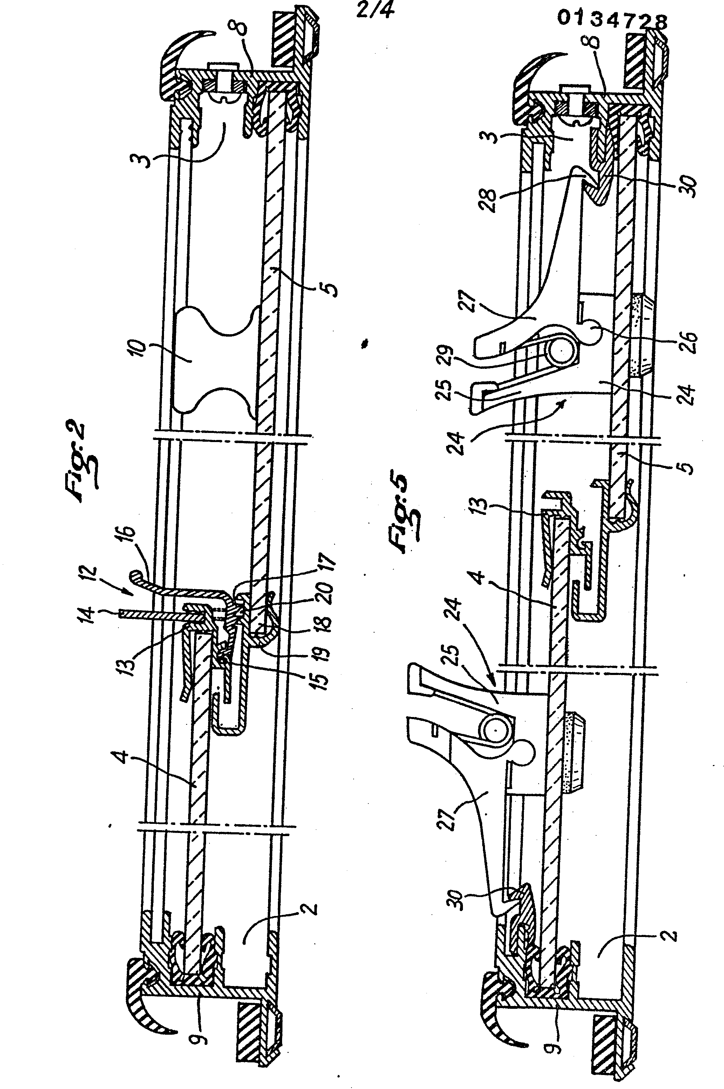

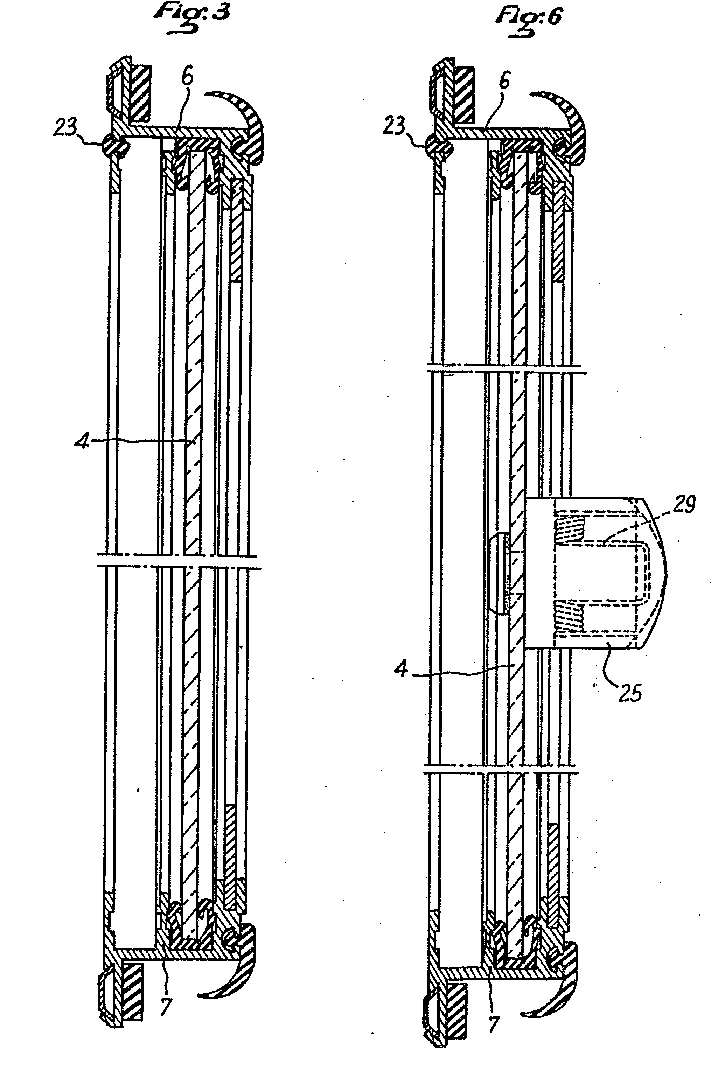

Un cadre 1 est réalisé de façon connue en soi à l'aide d'un profilé convenable présentant deux profils en U 2,3 ouverts sur l'intérieur du cadre 1 pour contenir chacun respectivement dans le sens longitudinal de ce dernier une première glace 4 appelée ici glace arrière et une seconde glace 5 appelée ici glace avant. Chaque glace 4,5 a une longueur limitée à la moitié de celle du cadre 1. Celui-ci a quand il a été monté sur un véhicule, un côté supérieur 6, un côté inférieur 7, un côté avant 8 et un côté arrière 9. Sur les figures 1 à 3, ainsi qu'il est courant, la glace arrière 4 est fixe entre le côté supérieur 6, le côté arrière 9 et le côté inférieur 7, tandis que la glace avant 5 est mobile dans un plan parallèle à la glace arrière fixe 4 par coulissement entre les côtés supérieur 6 et inférieur 7.

Pour être déplaçable aisément, la glace avant coulissante 5 est munie d'un bouton de manoeuvre accessible de l'intérieur du véhicule seulement ; selon l'invention ce bouton est fixé à la glace avant 5 dans la zone médiane de celle-ci dans le sens de la hauteur du cadre 1, de préférence, comme le montrent les figures 1, 2 sur l'axe géométrique 11 de symétrie de cette glace et du cadre 1.

Pour pouvoir immobiliser la glace avant coulissante 5 à sa position de fermeture, il existe un verrou 12 monté sur une traverse 13 qui fait partie du cadre 1 et qui s'étend entre le côté supérieur 6 et le côté inférieur 7, à la limite d'extension en longueur des glaces 4,5. A la traverse 13 est fixée une poignée fixe intérieure 14 sur laquelle est articulée par une rotule 15 une poignée mobile 16 pourvue de dents 17. Sur le bord arrière 18 de la glace avant 5 est monté un profilé 19 qui est aussi pourvu de dents 20 complémentaires aux dents 17 et situées en correspondance avec ces dernières. Le pivotement de la poignée mobile 16 par rapport à la poignée fixe 14 permet d'engager ensemble ou de dégager les dents 17 et 20. Selon l'invention, le verrou 12 est placé comme le bouton de manoeuvre 10 dans la même zone médiane et de préférence au milieu de cette zone sur l'axe de symétrie 11 dans le sens de la hauteur.

Des trous d'évacuation 21, 22 sont prévus à la fois sur le côté supérieur 6 et sur le côté inférieur 7 du cadre 1 au moment de sa fabrication, quand on désire évacuer rapidement l'eau qui se rassemble pendant la pluie dans le profilé qui constitue le cadre 1. En fait, au moment de la fabrication on ignore quel sera le véritable côté supérieur. Selon que le cadre 1 est monté sur le côté gauche ou sur le côté droit d'un véhicule, avec la glace coulissante 5 située en avant, par rotation autour de l'axe général longitudinal de ce véhicule, le côté supérieur est le côté 6 ou le côté 7. On peut obturer les trous 21, 22 du côté supérieur, après la mise en place du cadre 1 sur un véhicule à l'aide de bouchons convenables 23 en matière plastique.

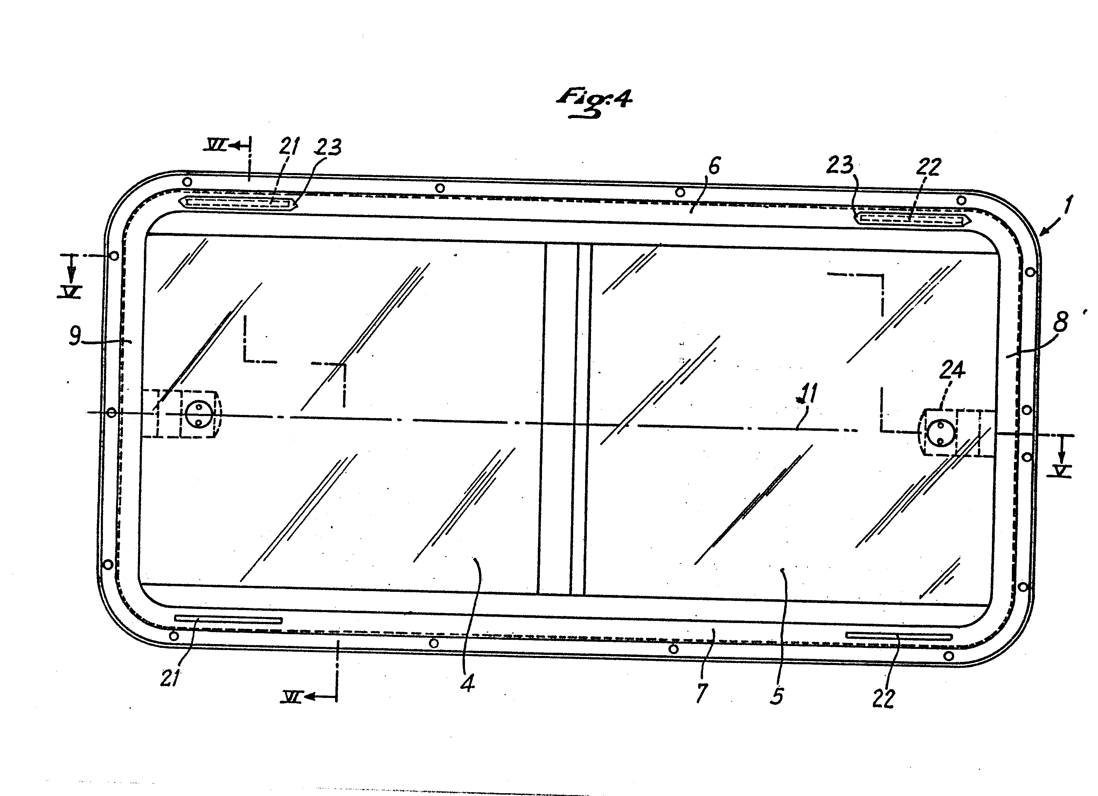

Dans l'exemple illustré par les figures 4 à 6, le cadre 1 est le même que celui des figures 1 à 3 sauf que le bouton de manoeuvre 10 et le verrou 12 qui sont distincts et espacés sont supprimés et remplacés par un autre bouton de manoeuvre 24 qui comprend une branche fixe 25 sur laquelle est articulée à l'aide d'une rotule 26 une branche pivotante 27 en équerre ayant à une extrémité libre un crochet 28. En position de fermeture de la glace avant coulissante 5 ce dernier s'engage sous l'effet d'un ressort 29 avec un organe d'accrochage complémentaire 30 fixé au côté avant 8 du cadre 1. Comme précédemment, le bouton de manoeuvre 24 et l'organe d'accrochage 29 sont situés dans la zone médiane du cadre 1 et de la glace 5, dans le sens de la hauteur, de préférence au milieu de cette zone, sur l'axe général longitudinal de symétrie 11.

Les figures 4 à 6 montrent aussi que l'on peut monter sur la glace arrière 4, dans la zone médiane et de préférence sur l'axe de symétrie 11, un bouton de manoeuvre 24 permettant de rendre cette glace coulissante et de la verrouiller en position de fermeture grâce à un moyen d'accrochage 30 fixé au côté arrière 9 du cadre 1.

Dans ce second exemple, le bouton de manoeuvre 24 et le verrou de blocage 12 sont réunis en un seul organe.

REVENDICATIONS

1. Fenêtre à glace coulissante pour véhicule comprenant un cadre (1) ayant un côté supérieur (6), un côté inférieur (7), un côté avant (8), un côté arrière (9), une première glace (4), une seconde glace (5), au moins cette seconde glace (5) étant coulissante dans le sens longitudinal du cadre (1) et munie d'un bouton de manoeuvre (10) et d'un verrou de blocage (12), caractérisée en ce que le bouton de manoeuvre (10) et le verrou de blocage (12) sont situés dans la zone médiane de la glace coulissante (5) dans le sens de la hauteur de celle-ci.

2. Fenêtre selon la revendication 1, caractérisée en ce que le bouton de manoeuvre (10) et le verrou de blocage (12) sont situés sensiblement dans le milieu de la zone médiane, sur l'axe de symétrie (11) de la glace coulissante (5).

3. Fenêtre selon la revendication 1, dans laquelle le cadre (1) comprend une traverse (13) qui réunit le côté supérieur (6) et le côté inférieur (7) à la limite d'extension en longueur des glaces (4,5), caractérisée en ce que cette traverse.(13) porte une poignée fixe intérieure (14) sur laquelle est articulée une poignée pivotante (16) pourvue d'au moins une dent (17) apte à s'accrocher avec un profilé (19) ayant au moins une dent (20) complémentaire fixé à la traverse (13).

4. Fenêtre selon la revendication 1, caractérisée en ce que le bouton de manoeuvre et le verrou de blocage sont réunis en un seul organe comprenant une branche (25) fixe par rapport à la glace mobile (5), une branche (27) articulée par rapport à la branche fixe (25) et ayant à son extrémité libre un crochet (28) destiné à s'engager avec un organe d'accrochage complémentaire (30) fixé au côté avant (8) du cadre (1) dans la zone médiane de ce dernier dans le sens de sa hauteur.

5. Fenêtre selon la revendication 1, caractérisée en ce que les deux glaces (4,5) sont coulissantes dans le cadre (1) et sont munies chacune respectivement d'un bouton de manoeuvre et d'un verrou de blocage montés sur l'axe de symétrie (11) dans le sens de la hauteur de chacune de ces glaces.

6. Fenêtre selon l'une quelconque des revendications 1 à 5, caractérisée en ce que le côté supérieur (6) et le côté inférieur (7) du cadre (1) présentent chacun au moins un trou (21,22) d'évacuation d'eau susceptible d'être obturé par un bouchon approprié (23) après la pose de cette fenêtre sur un véhicule.

*Fig.1*

Fig. 2

Fig. 5

0134728

Fig. 3

Fig. 6

*Fig.4*

0134728

**0134728**

Office européen
des brevets

# RAPPORT DE RECHERCHE EUROPEENNE

Numéro de la demande

EP 84 40 1272

## DOCUMENTS CONSIDERES COMME PERTINENTS

| Catégorie | Citation du document avec indication, en cas de besoin des parties pertinentes | Revendication concernée | CLASSEMENT DE LA DEMANDE (Int. Cl. 3) |
|---|---|---|---|
| X | US-A-3 087 537 (LE VAN)<br>* colonne 4, ligne 26 - colonne 5, ligne 24; figures 5,8 * | 1,3,4 | B 60 J 1/16 |
| X | US-A-3 808 742 (EHRET)<br>* colonne 3, lignes 31-47; figures 1,3,4 * | 1,2,4 | |
| X | GB-A- 623 957 (GENERAL MOTORS)<br>* page 1, lignes 72-91; page 2, lignes 71-77; figures 1,2,7,8 * | 1,2,4,6 | |
| X | US-A-2 283 009 (LEVAN)<br>* page 1, colonne de gauche, ligne 32 - colonne de droite, ligne 41; figure 1 * | 1-4 | |
| | | | DOMAINES TECHNIQUES RECHERCHES (Int. Cl. 3) |
| X | US-A-4 042 004 (KWAN)<br>* colonne 3, lignes 3-29; figure 2; colonne 5, lignes 39-42 * | 1,2,4,6 | B 60 J 1<br>B 61 D 25 |
| A | GB-A- 479 785 (WORCHESTER)<br>* page 3, lignes 87-119; figures 1-3,6 * | 1,4 | |

---

Le présent rapport de recherche a été établi pour toutes les revendications

| Lieu de la recherche | Date d'achèvement de la recherche | Examinateur |
|---|---|---|
| LA HAYE | 02-10-1984 | AYITER I. |